# EUROPÄISCHE PATENTSCHRIFT

(11) **EP 1 637 707 B1**
(45) Veröffentlichungstag und Bekanntmachung des Hinweises auf die Patenterteilung: **12.12.2007**
(21) Anmeldenummer: 05106896.3
(22) Anmeldetag: 27.07.2005
(51) Int. Cl.: F01N 11/00, F01N 3/20

(54) **Verfahren zum Betreiben einer Abgasbehandlungsvorrichtung einer Brennkraftmaschine und Vorrichtung zur Durchführung des Verfahrens**
Method of operating an exhaust treatment device of an internal combustion engine and device for carrying out the method
Procédé pour l'opération d'un dispositif de traitement d'échappement et dispositif pour la mise en oeuvre du procédé

(30) Priorität: 15.09.2004 DE 102004044506
(43) Veröffentlichungstag der Anmeldung: 22.03.2006
(73) Patentinhaber: ROBERT BOSCH GMBH, 70442 Stuttgart (DE)
(72) Erfinder: Gerlach, Michael, 71336, Waiblingen-Neustadt (DE); Muthusamy, Karthikeyan, 635109, Hosur (IN)

(56) Entgegenhaltungen:
- EP-A- 1 149 991
- DE-A1- 10 139 142
- US-B1- 6 363 771

## Beschreibung

### Stand der Technik

Die Erfindung geht aus von einem Verfahren zum Betreiben einer Abgasbehandlungsvorrichtung einer Brennkraftmaschine, bei dem ein mit Druckluft vermischtes Reagenzmittel in den Abgasbereich der Brennkraftmaschine eingebracht wird, sowie von einer Vorrichtung zur Durchführung des Verfahrens nach der Gattung der unabhängigen Ansprüche.

In der DE 101 39 142 A1 ist eine Abgasbehandlungsvorrichtung einer Brennkraftmaschine beschrieben, bei der zur Verringerung der NOx-Emissionen ein SCR-Katalysator (Selective-Catalytic-Reduction) eingesetzt ist, der die im Abgas enthaltenen Stickoxide mit dem Reduktionsmittel Ammoniak zu Stickstoff reduziert. Das Ammoniak wird in einem stromaufwärts vor dem SCR-Katalysator angeordneten Hydrolyse-Katalysator aus einer Harnstoff-Wasser-Lösung gewonnen. Der Hydrolyse-Katalysator setzt den in der Harnstoff-Wasser-Lösung enthaltenen Harnstoff mit Wasser zu Ammoniak und Kohlendioxid um. Zur Sicherstellung einer exakten Dosierung ist vorgesehen, die Konzentration der Harnstoff-Wasser-Lösung zu ermitteln.

Die Harnstoff-Wasser-Lösung wird mit einer Pumpe auf einen vorgegebenen Druck gebracht. Ein Dosierventil legt einen vorgegebenen Durchfluss fest. In einer Mischkammer wird der Harnstoff-Wasser-Lösung Druckluft zugemischt. Die Harnstoff-Wasser-Lösung wird zusammen mit der zugemischten Luft in das Abgas der Brennkraftmaschine derart eingesprüht, dass eine weitgehend gleichmäßige Anströmung des SCR-Katalysators erreicht wird.

In der DE 10 2004 018 221 A1 (nicht vorveröffentlicht) sind ein gattungsgemäßes Verfahren und eine gattungsgemäße Vorrichtung beschrieben, bei denen ebenfalls ein unter Druck stehendes Reagenzmittel in das Abgas einer Brennkraftmaschine vor einen SCR-Katalysator eingesprüht wird. Der Reagenzmitteldruck wird in Abhängigkeit von einer Kenngröße auf einen vorgegebenen Reagenzmittel-Solldruck festgelegt. Als Kenngröße kann eine Betriebsgröße der Brennkraftmaschine und/oder eine Kenngröße des Abgases der Brennkraftmaschine herangezogen werden. Der vorgegebene Reagenzmitteldruck-Sollwert wird im Rahmen einer Regelung geregelt, bei welcher der Reagenzmittel-Istdruck von einem Reagenzmittel-Drucksensor erfasst wird. Dem Reagenzmittel kann Druckluft zugemischt werden. Der Druckluftdruck kann ebenfalls in Abhängigkeit von der Kenngröße im Rahmen einer Regelung auf einen vorgegebenen Druckluftdruck-Sollwert geregelt werden, wobei der Druckluft-Istdruck von einem Druckluft-Drucksensor erfasst wird. Ein Defekt wenigstens eines der Drucksensoren kann zu einer verminderten Leistungsfähigkeit des SCR-Katalysators führen mit der Folge, dass ungereinigtes Abgas in die Umgebung gelangen kann.

In der US 6,363,771 B1 ist ein Verfahren zum Betreiben einer Abgasbehandlungsvorrichtung beschrieben, bei welchem ein mit Druckluft vermischtes Reagenzmittel in den Abgasbereich einer Brennkraftmaschine eingebracht wird. Sowohl der Druck der von einem Kompressor bereitgestellten Druckluft als auch der Druck des von einer Reagenzmittelpumpe bereitgestellten Reagenzmittels werden jeweils von Sensoren ständig gemessen und auf das Unterschreiten von Schwellenwerten überprüft.

In der EP 1149 991 A2 ist ein Verfahren zum Betreiben einer Abgasbehandlungsvorrichtung beschrieben, bei welchem ebenfalls ein mit Druckluft vermischtes Reagenzmittel in den Abgasbereich einer Brennkraftmaschine eingebracht wird. Bei diesem Verfahren werden sowohl der Druck der von einem Kompressor bereitgestellten Druckluft als auch der auf den Umgebungsluftdruck bezogene Differenzdruck an einer Reagenzmittel-Einbringvorrichtung ständig gemessen und auf das Unterschreiten von Schwellenwerten überprüft.

Der Erfindung liegt die Aufgabe zugrunde, ein Verfahren zum Betreiben einer Abgasbehandlungsvorrichtung einer Brennkraftmaschine, bei dem ein mit Druckluft vermischtes Reagenzmittel in den Abgasbereich der Brennkraftmaschine eingebracht wird, sowie eine Vorrichtung zur Durchführung des Verfahrens anzugeben, die eine möglichst exakte Dosierung des Reagenzmittels ermöglichen.

Die Aufgabe wird durch die in den unabhängigen Ansprüchen angegebenen Merkmale jeweils gelöst.

### Vorteile der Erfindung

Das erfindungsgemäße Verfahren zum Betreiben einer Abgasbehandlungsvorrichtung einer Brennkraftmaschine, bei dem ein mit Druckluft vermischtes Reagenzmittel in den Abgasbereich der Brennkraftmaschine eingebracht wird, bei dem die Druckluft über ein Rückschlagventil geführt wird, an dem ein Druckabfall auftritt, und bei dem der Druckluft-Druck vor dem Rückschlagventil gemessen wird, sieht eine Diagnose des Druckluft-Drucks vor, die zu einem ersten Zeitpunkt, bei dem ein Druckluft-Betriebsdruck oder ein applizierbarer Diagnose-Startdruck vorliegt, mit dem Absperren einer Druckluftzufuhr beginnt. Wenigstens zu einem zweiten späteren Zeitpunkt wird überprüft, ob der Druckluft-Druck mindestens einem unteren Grenzwert entspricht, der dem zum Umgebungsluftdruck addierten Öffnungsdruck des Rückschlagventils entspricht.
Eine Diagnosesteuerung stellt ein Fehlersignal bereit, wenn die Bedingung nicht erfüllt ist.

Das erfindungsgemäße Verfahren ermöglicht eine Diagnose des Druckluftpfads insbesondere im Hinblick auf das Auftreten eines Lecks. Durch ein Leck kann der Druckluft-Druck nur noch mit einem erhöhten Energieverbrauch zum Ausgleichen des Druckverlusts aufrechterhalten werden. Ein Leck kann weiterhin zu Druckschwankungen führen, die gegebenenfalls von einer Regelung der Druckluft-Druck nicht mehr vollständig ausgeglichen werden können.

Das erfindungsgemäße Verfahren ermöglicht weiterhin das Erkennen eines fehlerhaften Verhaltens von Bauteilen im Druckluftpfad, wie beispielsweise eine Veränderung des Öffnungsdrucks des Rückschlagventils.

Die vom ordnungsgemäßen Druck im Druckluftpfad abhängige Einbringung des Reagenzmittels in den Abgaskanal der Brennkraftmaschine kann durch die Einhaltung eines vorgegebenen Druckluft-Drucks optimal erfolgen, sodass eine Abgasbehandlungsvorrichtung, wie beispielsweise ein SCR-Katalysator, bei geringst möglichem Reagenzmittelverbrauch ein optimales Reinigungsergebnis erzielen kann.

Vorteilhafte Weiterbildungen und Ausgestaltungen des erfindungsgemäßen Verfahrens ergeben sich aus abhängigen Ansprüchen.

Eine Ausgestaltung sieht eine Überprüfung vor, ob der Druckluft-Druck wenigstens zum zweiten Zeitpunkt innerhalb eines vorgegebenen Bereichs liegt, der oberhalb des unteren Schwellenwerts liegt. Mit dieser Maßnahme wird ein gegebenenfalls vorliegender zu hoher Druck erkannt, der durch eine Veränderung von Bauteilen, wie beispielsweise des Rückschlagventils, verursacht sein kann.

Eine Weiterbildung sieht eine Überprüfung des Druckluft-Drucks auf wenigstens eine vorgegebene Änderung vor. Die Diagnose erfolgt während eines Zeitintervalls, das beispielsweise zwischen dem ersten und zweiten Zeitpunkt liegt. Beispielsweise wird wenigstens ein Differenzial-Quotient und/oder wenigstens ein Differenzen-Quotient des zeitlichen Verlaufs des Druckluft-Drucks ermittelt und bewertet. Mit dieser Maßnahme können zusätzliche Erkenntnisse über eine Veränderung im Druckluftpfad gewonnen werden. Die zusätzliche Information kann als Ausgangspunkt für weitere Überprüfungen herangezogen werden.

Eine Ausgestaltung sieht vor, dass mit dem ersten Zeitpunkt ein Nachlauf einer Steuerung beginnt oder dass der erste Zeitpunkt bereits im Nachlauf einer Steuerung liegt, während dem die Brennkraftmaschine abgeschaltet ist. Dadurch wird die Diagnose in einen Zeitbereich verlegt, der außerhalb der Betriebszeit des SCR-Katalysators liegt. Eine Beeinträchtigung der Abgasreinigung durch die Diagnose kann ausgeschlossen werden.

Die erfindungsgemäße Vorrichtung zur Durchführung des erfindungsgemäßen Verfahrens betrifft zunächst ein Steuergerät, das zur Durchführung des Verfahrens hergerichtet ist.

Das Steuergerät enthält insbesondere eine Diagnosesteuerung, die zum ersten Zeitpunkt ein Druckluftregelventil-Ansteuersignal zum Schließen eines Druckluftregelventils abgibt, sowie eine Druckluft-Druckbewertung, die ein Druckluft-Drucksignal wenigstens zum zweiten Zeitpunkt bewertet.

Das Steuergerät enthält vorzugsweise wenigstens einen elektrischen Speicher, in dem die Diagnosefunktionen als Computerprogramm abgelegt sind.

Weitere vorteilhafte Weiterbildungen und Ausgestaltungen der erfindungsgemäßen Vorgehensweise ergeben sich aus der folgenden Beschreibung.

### Zeichnung

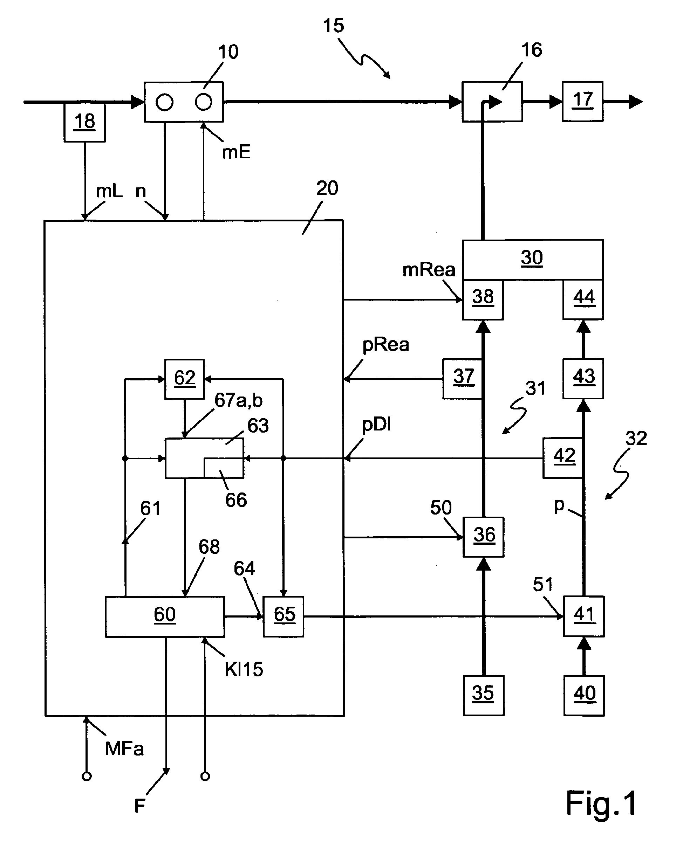

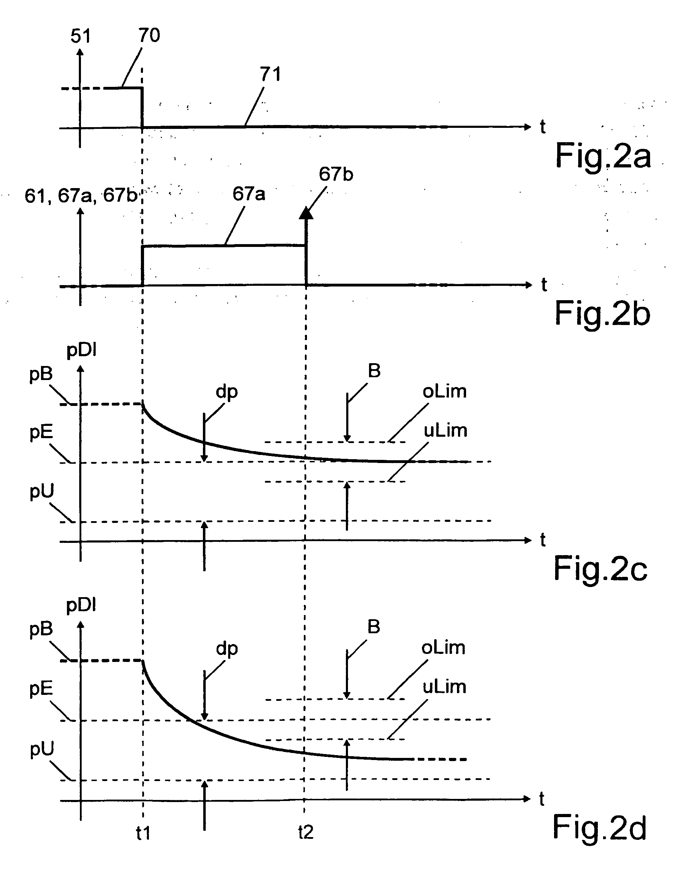

Figur 1 zeigt ein technisches Umfeld, in dem ein erfindungsgemäßes Verfahren abläuft, und die Figuren 2a - 2d zeigen Signalverläufe in Abhängigkeit von der Zeit.

Figur 1 zeigt eine Brennkraftmaschine 10, in deren Abgasbereich 15 eine Reagenzmittel-Einbringvorrichtung 16 sowie eine Abgasbehandlungsvorrichtung 17 angeordnet sind. In einem Ansaugbereich der Brennkraftmaschine 10 ist ein Luftsensor 18 vorgesehen.

Der Luftsensor 18 gibt an eine Steuerung 20 ein Luftsignal mL und die Brennkraftmaschine 10 ein Drehzahlsignal n ab. Weiterhin wird der Steuerung 20 ein Drehmoment-Sollwert MFa zur Verfügung gestellt. Die Steuerung 20 stellt der Brennkraftmaschine 10 ein Kraftstoffsignal mE zur Verfügung.

Die Reagenzmittel-Einbringvorrichtung 16 ist mit einer Mischkammer 30 verbunden, in der ein von einem Reagenzmittelpfad 31 bereitgestelltes Reagenzmittel mit einer von einem Druckluftpfad 32 bereitgestellten Druckluft vermischt wird.

Das in einem Reagenzmitteltank 35 gelagerte Reagenzmittel wird von einer Reagenzmittelpumpe 36 auf einen vorgegebenen Reagenzmitteldruck gebracht, der von einem Reagenzmittel-Drucksensor 37 erfasst wird. Das Reagenzmittel wird von einem Dosierventil 38 in die Mischkammer 30 abgegeben.

Die in einem Drucklufttank 40 bereitgestellte Druckluft wird mit einem Druckluftregelventil 41 auf einen vorgegebenen Druckluft-Druck p gebracht, den ein Druckluft-Drucksensor 42 erfasst. Die Druckluft gelangt über eine überkritische Drossel 43 und ein Rückschlagventil 44 in die Mischkammer 30.

Der Reagenzmittel-Drucksensor 37 stellt der Steuerung 20 ein Reagenzmittel-Drucksignal pRea und der Druckluft-Drucksensor 42 ein Druckluft-Drucksignal pDI zur Verfügung.

Die Steuerung 20 gibt an das Dosierventil 38 ein Reagenzmittel-Dosiersignal mRea, an die Reagenzmittelpumpe 36 ein Reagenzmittelpumpen-Ansteuersignal 50 und an das Druckluftregelventil 41 ein Druckluftregelventil-Ansteuersignal 51 ab.

Die Steuerung 20 enthält eine Diagnosesteuerung 60, die ein Startsignal 61 sowohl an einen Zeitgeber 62 als auch an eine Druckluft-Druckbewertung 63 abgibt. Die Diagnosesteuerung 60 gibt weiterhin ein Abschaltsignal 64 an eine Druckluftregelventil-Ansteuerung 65 ab, die das Druckluftregelventil-Ansteuersignal 51 bereitstellt. Die Diagnosesteuerung 60 stellt weiterhin ein Fehlersignal F zur Verfügung. Der Diagnosesteuerung 60 wird ein Brennkraftmaschinen-Betriebssignal KI15 zur Verfügung gestellt.

Der Zeitgeber 62, dem das Druckluft-Drucksignal pDI zur Verfügung gestellt wird, gibt an die Druckluft-Druckbewertung 63, die eine Druckluft-Drucksignal-Schwellenvorgabe 66 enthält, ein erstes und zweites Berechnungssignal 67a, 67b ab. Die Druckluft-Druckbewertung 63, der das Druckluft-Drucksignal pDI zur Verfügung gestellt wird, gibt ein Ergebnissignal 68 an die Diagnosesteuerung 60 ab.

Figur 2a zeigt das Druckluftregelventil-Ansteuersignal 51 in Abhängigkeit von der Zeit t, das vor einem ersten Zeitpunkt t1 einen Einschaltpegel 70 und nach dem ersten Zeitpunkt t1 einen Ausschaltpegel 71 aufweist.

Figur 2b zeigt ein erstes und zweites Berechnungssignal 67a, 67b in Abhängigkeit von der Zeit t. Das erste Berechnungssignal 67a tritt zwischen dem ersten und einem zweiten Zeitpunkt t1, t2 auf. Das zweite Berechnungssignal 67b tritt zum zweiten Zeitpunkt t2 auf.

Figur 2c zeigt einen Verlauf des Druckluft-Drucksignals pDI in Abhängigkeit von der Zeit t. Zum ersten Zeitpunkt t1 weist das Druckluft-Drucksignal pDI einen Betriebsdruck pB auf, der zum zweiten Zeitpunkt t2 auf einen Enddruck pE abgefallen ist, der oberhalb eines unteren Schwellenwerts uLim und unterhalb eines oberen Schwellenwerts oLim liegt. Der untere und obere Schwellenwert uLim, oLim schließen einen vorgegebenen Bereich B ein. Zwischen dem Enddruck pE und einem Umgebungsluftdruck pU liegt ein Öffnungsdruck dp des Rückschlagventils 44.

Figur 2d zeigt ebenfalls einen Verlauf des Druckluft-Drucksignals pDI in Abhängigkeit von der Zeit t. Das Druckluft-Drucksignal pDI liegt zum zweiten Zeitpunkt t2 unterhalb des unteren Schwellenwerts uLim.

Das erfindungsgemäße Verfahren läuft folgendermaßen ab:

Nach der Inbetriebnahme der Brennkraftmaschine 10 durch das Brennkraftmaschinen-Betriebssignal KI15, das beispielsweise von einem nicht näher gezeigten Zündschloss eines Kraftfahrzeugs bereitgestellt wird, legt die Steuerung 20 in Abhängigkeit von wenigstens einem Eingangssignal das Kraftstoffsignal mE fest. Als Eingangssignal ist insbesondere der von der Position eines nicht näher gezeigten Fahrpedals des Kraftfahrzeugs abgeleitete Drehmoment-Sollwert MFa vorgesehen. Gegebenenfalls wird weiterhin das vom Luftsensor 18 bereitgestellte Luftsignal mL und/oder die von der Brennkraftmaschine 10 bereitgestellte Drehzahl n berücksichtigt.

Das Kraftstoffsignal mE legt beispielsweise eine Einspritzdauer von nicht näher gezeigten Kraftstoffventilen fest, die in einer nicht näher gezeigten Kraftstoffzumessvorrichtung angeordnet sind.

Das Abgas der Brennkraftmaschine 10 wird in der Abgasbehandlungsvorrichtung 17 von wenigstens einer Abgaskomponente gereinigt. Bei der Abgasbehandlungsvorrichtung 17 handelt es sich beispielsweise wenigstens um einen Katalysator und/oder wenigstens ein Partikelfilter. Der Katalysator ist beispielsweise ein SCR-Katalysator (Selective-Catalytic-Reduction), der mit Ammoniak als Reagenzmittel die im Abgas enthaltenen Stickoxide zu Wasserstoff und Stickstoff konvertiert. Bei einem Partikelfilter dient ein Reagenzmittel beispielsweise zur Konditionierung der Partikel oder zur Unterstützung des Abbrands der Partikel während einer Regeneration des Partikelfilters.

Das Reagenzmittel kann unmittelbar in den Abgasbereich 15 stromaufwärts vor die Abgasbehandlungsvorrichtung 17 eingebracht werden. Eine Alternative sieht vor, dass das Reagenzmittel innermotorisch erzeugt wird. Im gezeigten Ausführungsbeispiel wird davon ausgegangen, dass die Reagenzmittel-Einbringvorrichtung 16 vorgesehen ist, die das Reagenzmittel in den Abgasbereich 15 stromaufwärts vor der Abgasbehandlungsvorrichtung 17 einbringt.

Das Reagenzmittel wird im Reagenzmitteltank 35 gelagert, von der Reagenzmittelpumpe 36 auf einen vorgegebenen Reagenzmittel-Solldruck gebracht und über das Dosierventil 38 der Mischkammer 30 zugeführt. In der Mischkammer 30 wird das Reagenzmittel mit Druckluft vermischt, die im Drucklufttank 40 bevorratet ist. Der Druckluft-Druck wird mit dem Druckluftregelventil 41 auf einen vorgegebenen Druckluft-Sollwert gebracht. Sowohl der Reagenzmitteldruck als auch der Druckluft-Druck werden von Drucksensoren 37, 42 erfasst. Der Reagenzmittel-Drucksensor 37 stellt das Reagenzmittel-Drucksignal pRea und der Druckluft-Drucksensor 42 das Druckluft-Drucksignal pDI bereit.

Nach der Inbetriebnahme der Brennkraftmaschine 10 mit dem Brennkraftmaschinen-Betriebssignal KI15 wird mit dem Reagenzmittelpumpen-Ansteuersignal 50 das Reagenzmittel auf einen vorgegebenen Druck von beispielsweise 4 bar gebracht. Die Reagenzmittelmenge wird in Abhängigkeit von beispielsweise Betriebskenngrößen der Brennkraftmaschine 10 und/oder Betriebskenngrößen der Abgasbehandlungsvorrichtung 17 festgelegt. Die Dosierung erfolgt mit dem Dosierventil 38, dessen Öffnungsquerschnitt mit dem Reagenzmittel-Ansteuersignal mRea verändert werden kann. Die Druckluft wird auf einen Betriebsdruck pB von beispielsweise 8 bar festgelegt. Die Druckluftregelventil-Ansteuerung 65 legt hierzu in Abhängigkeit vom Druckluft-Drucksignal pDI das Druckluftregelventil-Ansteuersignal 51 fest.

Der Drucklufttank 40 ist in einem Kraftfahrzeug zum Betreiben einer Bremsanlage und/oder einer hilfskraftunterstützten Lenkung und/oder sonstigen Verstellantrieben gegebenenfalls vorhanden. Eventuell ist ein Kompressor einzusetzen. Der Druckluft-Druck kann vor dem Mischer 30 beispielsweise mit der überkritischen Drossel 43 und/oder durch den Öffnungsdruck des Rückschlagventils 44, ausgehend von 8 bar, auf beispielsweise 4 bar vermindert werden.

In einer alternativen Ausgestaltung ist die Mischkammer 30 im Dosierventil 38 enthalten. Weiterhin kann vorgesehen sein, dass die Reagenzmittel-Einbringvorrichtung 16 unmittelbar durch das Dosierventil 38 gebildet wird, das direkt in den Abgasbereich 15 einsprüht.

Ein defektes Bauteil im Druckluftpfad 32 oder beispielsweise ein Leck hat einen Einfluss auf die Abgasbehandlung, da der Druckluft-Druck p zumindest die räumliche Verteilung des Reagenzmittels im Abgasbereich 15 stromaufwärts vor der Abgasbehandlungsvorrichtung 17 mitbestimmt. Eine räumliche Überdosierung kann zu einem Durchbruch des Reagenzmittels führen. Eine räumliche Unterdosierung hat zur Folge, dass die Abgasbehandlungsvorrichtung 17 die Reinigungsfunktion nicht mehr vollständig erfüllen kann.

Vorgesehen ist deshalb die Diagnose des Druckluft-Drucks p, die in der Druckluft-Druckbewertung 63 anhand des Druckluft-Drucksignals pDI durchgeführt wird. Die Diagnose wird von der Diagnosesteuerung 60 zum ersten Zeitpunkt t1 dadurch gestartet, dass das Druckluftregelventil 41 durch ein Ändern des Druckluftregelventil-Ansteuersignals 51 vom Einschaltpegel 70 zum Ausschaltpegel 71 abgeschaltet wird.

Der Druckluft-Druck p weist zum ersten Zeitpunkt t1 den Betriebsdruck pB auf. In einer alternativen, nicht näher gezeigten Ausgestaltung kann vorgesehen sein, dass die Diagnose zu einem Zeitpunkt gestartet wird, bei dem der Druckluft-Druck p einen applizierbaren Diagnose-Startdruck aufweist.

Gleichzeitig startet die Diagnosesteuerung 60 mit dem Startsignal 61 den Zeitgeber 62, der wenigstens zum zweiten Zeitpunkt t2 das zweite Berechnungssignal 67b an die Druckluft-Druckbewertung 63 abgibt. Gegebenenfalls kann die Diagnose zu mehreren Zeitpunkten vorgesehen sein. Gegebenenfalls kann ein nicht näher gezeigtes Diagnose-Zeitintervall vorgegebenen sein, während dem die Druckluft-Druckbewertung 63 das Druckluft-Drucksignal pDI ständig bewertet.

Die Druckluft-Druckbewertung 63 vergleicht das Druckluft-Drucksignal pDI wenigstens zum zweiten Zeitpunkt t2 mit dem unteren Schwellenwert uLim, der wenigstens näherungsweise dem zum Umgebungsluftdruck pU addierten Öffnungsdruck dp des Rückschlagventils 44 entspricht. Wenn der Druckluft-Druck p nicht mindestens dem unteren Schwellenwert uLim entspricht, gibt die Druckluft-Druckbewertung 63 das Ergebnissignal 68 an die Diagnosesteuerung 60 ab, die das Fehlersignal F bereitstellt.

Bei der Festlegung des unteren Schwellenwerts uLim wird davon ausgegangen, dass das Rückschlagventil 44 bei einem Unterschreiten des Öffnungsdrucks dp, der beispielsweise 600 mbar beträgt, schließt, sodass im Druckluftpfad 32 nach dem Schließen des Rückschlagventils 44 ein Druckabfall auf den Enddruck pE auftritt, wobei der Enddruck pE mindestens dem um den Öffnungsdruck dp des Rückschlagventils 44 erhöhten Umgebungsluftdruck pU entspricht. Der Enddruck pE liegt daher bei einem Umgebungsluftdruck pU von 1 bar bei wenigstens näherungsweise 1,6 bar.

Gemäß einer vorteilhaften Ausgestaltung ist eine Anpassung des unteren und gegebenenfalls des oberen Schwellenwerts uLim, oLim an den Umgebungsluftdruck pU vorgesehen. Mit dieser Maßnahme wird eine Anpassung wenigstens des unteren Schwellenwerts uLim an den schwankenden Umgebungsluftdruck pU erreicht. Diese Maßnahme weist insbesondere beim vorgesehenen Einsatz der Brennkraftmaschine 10 in einem nicht näher gezeigten Kraftfahrzeug Vorteile auf, da bei einem Wechsel der geografischen Höhe des Kraftfahrzeugs mit einer Änderung des ohnehin sich ständig ändernden Umgebungsluftdrucks pU zu rechnen ist.

Gemäß einer Ausgestaltung ist vorgesehen, dass die Druckluft-Druckbewertung 63 das Druckluft-Drucksignal pDI nicht nur mit dem unteren Schwellenwert uLim, sondern auch mit dem vorgegebenen oberen Schwellenwert oLim vergleicht. Es erfolgt eine Überprüfung, ob das Druckluft-Drucksignal pDI innerhalb des zwischen dem unteren und oberen Schwellenwert uLim, oLim liegenden vorgegebenen Bereichs B liegt. Ein Überschreiten des oberen Schwellenwerts oLim deutet darauf hin, dass beispielsweise das Rückschlagventil 44, die überkritische Drossel 43 oder beispielsweise der Druckluft-Drucksensor 42 einen Defekt aufweisen.

In Figur 2c ist ein Verlauf des Druckluft-Drucksignals pDI eingetragen, der einem fehlerfreien Druckluftpfad 32 entspricht. Zum zweiten Zeitpunkt t2 liegt das Druckluft-Drucksignal pDI oberhalb des unteren Schwellenwerts uLim. Weiterhin liegt das Druckluft-Drucksignal pDI zum zweiten Zeitpunkt t2 innerhalb des Bereichs B. Das Fehlersignal F wird in diesem Fall von der Diagnosesteuerung 60 nicht bereitgestellt.

Figur 2d zeigt einen Verlauf des Druckluft-Drucksignals pDI, der einem fehlerhaften Druckluftpfad 32 entspricht. Das Druckluft-Drucksignal pDI fällt nach dem ersten Zeitpunkt t1 rasch unter den unteren Schwellenwert uLim. In diesem Fall gibt die Druckluft-Druckbewertung 63 das Ergebnissignal 68 aus, das die Diagnosesteuerung 60 zur Ausgabe des Fehlersignals F veranlasst.

Gemäß einer Weiterbildung kann vorgesehen sein, dass die Druckluft-Druckbewertung 63 das Druckluft-Drucksignal pDI während eines Zeitintervalls, das beispielsweise zwischen dem ersten und zweiten Zeitpunkt t1, t2 liegt, auf das Vorliegen von vorgegebenen Änderungen überprüft. Die Diagnose wird während des Vorliegens des ersten Berechnungssignals 67a durchgeführt. Beispielsweise kann zumindest eine Ermittlung des Differenzial-Quotienten vorgesehen sein, wobei der Differenzial-Quotient durch einen Differenzen-Quotienten anzunähern ist. Beispielsweise kann zusätzlich oder alternativ wenigstens eine Ermittlung des Differenzen-Quotienten vorgesehen sein.

Anhand eines Vergleichs mit wenigstens einem vorgegebenen Grenzwert wird überprüft, ob unzulässige Abweichungen vorliegen. Wenn dies der Fall ist, kann die Diagnosesteuerung 60 beispielsweise eine erneute Überprüfung des Druckluftpfads 32 starten. Weiterhin kann ein nicht näher gezeigtes Fehlersignal bereitgestellt werden, das vorzugsweise in einen nicht näher gezeigten Fehlerspeicher hinterlegt wird.

Das Fehlersignal F stellt die Diagnosesteuerung 60 nur dann bereit, wenn der Druckluft-Druck p wenigstens zum zweiten Zeitpunkt t2 nicht mindestens dem unteren Schwellenwert uLim entspricht.

## Patentansprüche

1. Verfahren zum Betreiben einer Abgasbehandlungsvorrichtung (17) einer Brennkraftmaschine (10), bei dem ein mit Druckluft vermischtes Reagenzmittel in den Abgasbereich (15) der Brennkraftmaschine (10) eingebracht wird, bei dem die Druckluft über ein Rückschlagventil (44) geführt wird, das einen Öffnungsdruck (dp) aufweist, und bei dem der Druckluft-Druck (p) vor dem Rückschlagventil (44) gemessen wird, bei dem eine Diagnose des Druckluft-Drucks (p) vorgenommen wird, die zu einem Startzeitpunkt (t1) mit dem Schließen eines Druckluftregelventils (41) beginnt, bei dem wenigstens zu einem zweiten späteren Zeitpunkt (t2) überprüft wird, ob der Druckluft-Druck (p) mindestens einem unteren Schwellenwert (uLim) entspricht, der weinigstens näherungsweise dem zum Umgebungsluftdruck (pU) addierten Öffnungsdruck (dp) des Rückschlagventils (44) entspricht, und bei dem ein Fehlersignal (F) bereitgestellt wird, wenn die Bedingung nicht erfüllt ist.

2. Verfahren nach Anspruch 1, **dadurch gekennzeichnet, dass** überprüft wird, ob der Druckluft-Druck (p) innerhalb eines vorgegebenen Bereichs (B) liegt, der oberhalb des unteren Schwellenwerts (uLim) liegt.

3. Verfahren nach Anspruch 1, **dadurch gekennzeichnet, dass** der Druckluft-Druck (p) auf wenigstens eine vorgegebene Änderung überprüft wird.

4. Verfahren nach Anspruch 3, **dadurch gekennzeichnet, dass** wenigstens ein Differenzen-Quotient und/oder wenigstens ein Differenzial-Quotient des zeitlichen Verlaufs des Druckluft-Drucks (p) ermittelt und bewertet wird.

5. Verfahren nach Anspruch 3, **dadurch gekennzeichnet, dass** die Überprüfung während des zwischen dem ersten und zweiten Zeitpunkt (t1, t2) liegenden Zeitintervalls durchgeführt wird.

6. Verfahren nach Anspruch 1, **dadurch gekennzeichnet, dass** mit dem ersten Zeitpunkt (t1) ein Nachlauf eines Steuergeräts (20) beginnt oder dass der erste Zeitpunkt (t1) im Nachlauf eines Steuergeräts (20) liegt, während dem die Brennkraftmaschine (10) bereits abgeschaltet ist.

7. Steuergerät zur Verwendung bei einem Verfahren nach einem der Ansprüche 1 - 6, **dadurch gekennzeichnet, dass** Mittel zur Durchführung des Verfahrens nach einem der Ansprüche 1-6 vorhanden sind.

8. Steuergerät nach Anspruch 7, **dadurch gekennzeichnet, dass** das Steuergerät (20) eine Diagnosesteuerung (60), die zum Startzeitpunkt (t1) ein Druckluftregelventil-Ansteuerungssignal (51) zum Schließen des Druckluftregelventils (41) abgibt, sowie eine Druckluft-Druckbewertung (63) zum Bewerten eines Druckluft-Drucksignals (pDI) wenigstens zum zweiten Zeitpunkt (t2) enthält.

9. Steuergerät nach Anspruch 7, **dadurch gekennzeichnet, dass** das Steuergerät (20) einen Zeitgeber (62) enthält, der wenigstens zum zweiten Zeitpunkt (t2) ein Bereichnungssignal (67b) an die Druckluft-Druckbewertung (63) abgibt.

## Claims

1. Method for operating an exhaust gas treatment device (17) of an internal combustion engine (10), in which method a reagent which is mixed with compressed air is introduced into the exhaust gas region (15) of the internal combustion engine (10), in which method the compressed air is conducted via a non-return valve (44) which has an opening pressure (dp), and in which method the compressed-air pressure (p) upstream of the non-return valve (44) is measured, in which method a diagnosis of the compressed-air pressure (p) is carried out, which diagnosis begins at a start time (t1) with the closure of a compressed-air regulating valve (41), in which method it is checked, at least at a second, later time (t2), whether the compressed-air pressure (p) corresponds to at least one lower threshold value (uLim) which corresponds at least approximately to the opening pressure (dp) of the non-return valve (44) added to the ambient air pressure (pU), and in which method a fault signal (F) is provided if the condition is not met.

2. Method according to Claim 1, **characterized in that** it is checked whether the compressed-air pressure (p) lies within a predefined range (B) which lies above the lower threshold value (uLim).

3. Method according to Claim 1, **characterized in that** the compressed-air pressure (p) is checked for at least one predefined change.

4. Method according to Claim 3, **characterized in that** at least one difference quotient and/or at least one differential quotient of the time profile of the compressed-air pressure (p) is determined and evaluated.

5. Method according to Claim 3, **characterized in that** the check is carried out during the time interval between the first and the second times (t1, t2).

6. Method according to Claim 1, **characterized in that** a run-on of a control unit (20) begins at the first time (t1), or **in that** the first time (t1) lies in the run-on of a control unit (20), during which the internal combustion engine (10) is already switched off.

7. Control unit for use in a method according to one of Claims 1 - 6, **characterized in that** means for carrying out the method according to one of Claims 1 - 6 are provided.

8. Control unit according to Claim 7, **characterized in that** the control unit (20) comprises a diagnostic controller (60), which, at the start time (t1), outputs a compressed-air regulating valve actuating signal (51) for closing the compressed-air regulating valve (41), and a compressed-air pressure evaluating means (63) for evaluating a compressed-air pressure signal (pDI) at least at the second time (t2).

9. Control unit according to Claim 7, **characterized in that** the control unit (20) comprises a timer (62) which outputs a calculation signal (67b) to the compressed-air pressure evaluating means (63) at least at the second time (t2).

## Revendications

1. Procédé de gestion d'un dispositif de traitement des gaz d'échappement d'un moteur à combustion interne 10 selon lequel
on introduit un agent réactif mélangé à de l'air comprimé dans la plage de traitement des gaz d'échappement 15 du moteur à combustion interne 10,
on fait passer l'air comprimé par un clapet anti-retour 44 de pression d'ouverture (dp) et
on mesure la pression (p) de l'air comprimé en amont du clapet anti-retour 44,
on effectue un diagnostic de la pression (p) d'air comprimé qui commence à l'instant de démarrage t1 par la fermeture d'une soupape de régulation d'air comprimé 41,
on vérifie au moins à un second instant ultérieur t2 si la pression (p) de l'air comprimé correspond au moins à un seuil inférieur (uLim) qui correspond au moins sensiblement à la pression d'ouverture (dp) du clapet anti-retour 44 additionnée à la pression (pU) de l'air ambiant et
on fournit un signal de défaut (F) si la condition n'est pas remplie.

2. Procédé selon la revendication 1,
**caractérisé en ce qu'**
on vérifie si la pression (p) de l'air comprimé se situe dans une plage prédéfinie (B) supérieure au seuil inférieur (uLim).

3. Procédé selon la revendication 1,
**caractérisé en ce qu'**
on vérifie la pression (p) d'air comprimé quant à une variation prédéfinie.

4. Procédé selon la revendication 3,
**caractérisé en ce qu'**
on détermine au moins un quotient de différence et/ou au moins un quotient différentiel de l'évolution chronologique de la pression (p) de l'air comprimé et on l'exploite.

5. Procédé selon la revendication 3,
**caractérisé en ce qu'**
on effectue le contrôle dans l'intervalle compris entre le premier et le second instant t1, t2.

6. Procédé selon la revendication 1,
**caractérisé en ce qu'**
au premier instant t1 commence la fin de fonctionnement d'un appareil de commande 20 ou le premier instant t1 se situe dans la fin de fonctionnement d'un appareil de commande 20 alors que le moteur à combustion interne 10 est déjà arrêté.

7. Appareil de commande pour la mise en oeuvre d'un procédé selon l'une des revendications 1 à 6,
**caractérisé par**
des moyens pour mettre en oeuvre le procédé selon l'une des revendications 1 à 6.

8. Appareil de commande selon la revendication 7,
**caractérisé en ce que**
l'appareil de commande 20 comporte une commande de diagnostic 60 générant à l'instant de départ t1, un signal de commande de vanne de régulation de pression 51 pour fermer la vanne de régulation de pression 41 ainsi qu'un moyen d'exploitation de la pression de l'air comprimé 63 pour exploiter le signal de pression d'air comprimé (pDI) au moins à un second instant t2.

9. Appareil de commande selon la revendication 7,
**caractérisé en ce que**
l'appareil de commande 20 comporte une horloge 62 qui émet au moins au second instant t2, un signal de calcul 67b au moyen d'exploitation de la pression d'air comprimé 63.
